(19) **Europäisches Patentamt European Patent Office Office européen des brevets**

(11) **EP 3 536 101 B1**

(12) # EUROPEAN PATENT SPECIFICATION

(45) Date of publication and mention of the grant of the patent:
**19.11.2025 Bulletin 2025/47**

(21) Application number: **17805031.6**

(22) Date of filing: **03.11.2017**

(51) International Patent Classification (IPC):
**H04B 7/06** *(2006.01)*     **H04B 7/08** *(2006.01)*
**H04W 48/14** *(2009.01)*

(52) Cooperative Patent Classification (CPC):
**H04B 7/06966; H04B 7/088;** H04W 48/14

(86) International application number:
**PCT/US2017/060023**

(87) International publication number:
**WO 2018/085709 (11.05.2018 Gazette 2018/19)**

(54) **BEAM RECIPROCITY INDICATION AND JOINT UPLINK DOWNLINK BEAM MANAGEMENT**

STRAHLREZIPROZITÄTSANZEIGE UND GEMEINSAMES UPLINK-DOWNLINK-STRAHLMANAGEMENT

INDICATION DE RÉCIPROCITÉ DE FAISCEAU ET GESTION DE FAISCEAU DE LIAISON DESCENDANTE/MONTANTE CONJOINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2016 US 201662417582 P**
**07.11.2016 US 201662418483 P**

(43) Date of publication of application:
**11.09.2019 Bulletin 2019/37**

(73) Proprietor: **Apple Inc.**
**Cupertino, CA 95014 (US)**

(72) Inventors:
  • **ZHANG, Yushu**
    **Beijing 100190 (CN)**
  • **HAN, Seunghee**
    **San Jose, California 95120 (US)**
  • **LI, Qian**
    **Beaverton, Oregon 97006 (US)**
  • **LI, Guangjie**
    **Beijing 100192 (CN)**
  • **WU, Geng**
    **Portland, Oregon 97229 (US)**
  • **WU, Xiaoyun**
    **Beijing 201103 (CN)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
  • **INTERDIGITAL COMMUNICATIONS: "3GPP TSG RAN WG1 Meeting #86bis; R1-1610356; Considerations for DL Broadcast Channel", vol. RAN WG1, no. Lisbon, Portugal; 20161010 - 20161014, 9 October 2016 (2016-10-09), XP051150368, Retrieved from the Internet <URL:http://www.3gpp.org/ftp/ Meetings_3GPP_SYNC/RAN1/Docs/> [retrieved on 20161009]**
  • **SAMSUNG: "3GPP TSG RAN WG1 Meeting #86bis; R1-1609117; Discussion on RA procedure", vol. RAN WG1, no. Lisbon, Portugal; 20161010 - 20161014, 9 October 2016 (2016-10-09), XP051149166, Retrieved from the Internet <URL:http://www.3gpp.org/ftp/ Meetings_3GPP_SYNC/RAN1/Docs/> [retrieved on 20161009]**

- **SAMSUNG QUALCOMM INTERDIGITAL INTEL IITM IITH CEWIT TEJAS NETWORKS KT MEDIATEK AT&T VERIZON MOTOROLA: "3GPP TSG RAN WG1 Meeting #86bis; R1-1610849; WF on definition of Beam reciprocity", vol. RAN WG1, no. Lisbon, Portugal; 20161010 - 20161015, 18 October 2016 (2016-10-18), XP051160428, Retrieved from the Internet <URL:http://www.3gpp.org/ftp/tsg_ran/WG1_RL1/TSGR1_86b/Docs/> [retrieved on 20161018]**

## Description

### CLAIM OF PRIORITY

The present application claims priority under 35 U.S.C. § 119(e) to United States Provisional Patent Application Serial Number 62/417,582 filed November 4, 2016 and entitled "BEAM RECIPROCITY INDICATION," and to United States Provisional Patent Application Serial Number 62/418,483 filed November 7, 2016 and entitled "JOINT UPLINK DOWNLINK BEAM MANAGEMENT FOR NEW RADIO".

### BACKGROUND

A variety of wireless cellular communication systems have been implemented, including a 3rd Generation Partnership Project (3 GPP) Universal Mobile Telecommunications System, a 3GPP Long-Term Evolution (LTE) system, and a 3GPP LTE- Advanced (LTE-A) system. Next-generation wireless cellular communication systems based upon LTE and LTE-A systems are being developed, such as a fifth generation (5G) wireless systems and New Radio (NR) wireless systems, and 5G and NR mobile networks system.

Next-generation wireless cellular communication systems may provide support for higher bandwidths in part by supporting beamforming. INTERDIGITAL COMMUNICATIONS, "3GPP TSG RAN WG1 Meeting #86bis; R1-1610356; Considerations for DL Broadcast Channel", vol. RAN WG1, 3GPP DRAFT; R1-1610356 discloses some design principles for PBCH and system information transmission for NR and proposes that: the always-on beams and always-on signals of system information should be minimized; PBCH transmission based on all or a subset of the beams in a beam sweep should be enabled; on demand system information, with reduced overhead, should be considered for NR; PBCH should implicitly or explicitly indicate the Tx/Rx beam reciprocity of the system; Tx/Rx beam reciprocity should be used to associate the PRACH uplink beam with the PBCH downlink beam; and priority-based channel coding for multiple SIBS should be considered for system information transmission.

SAMSUNG, "3GPP TSG RAN WG1 Meeting #86bis; R1-1609117; Discussion on RA procedure", vol. RAN WG1, 3GPP DRAFT; R1-1609117 discusses the RACH procedure and proposes: the design of RACH mechanism for NR should cover both of the following scenarios: the TRP has Tx/Rx beam reciprocity, or the TRP does not have Tx/Rx beam reciprocity or have partial Tx/Rx beam reciprocity; for the TRP with Tx/Rx beam reciprocity: study to fully explore the beam reciprocity in the design of RACH to reduce the overhead, or study how configure the mapping between downlink initial access signal transmission and the RACH resources; and for the TRP without Tx/Rx beam reciprocity: study different design for the cases of no TRP Tx/Rx beam reciprocity, or study how to select RACH resource for preamble transmission, or study how to report one Tx beam ID during RACH procedure, for example in preamble sequence ID or RACH msg 3.

### STATEMENT OF INVENTION

The present invention is defined by the features of the independent claim(s). Preferred advantageous embodiments thereof are defined by the sub-features of the dependent claims.

### BRIEF DESCRIPTION OF THE DRAWINGS

The embodiments of the disclosure will be understood more fully from the detailed description given below and from the accompanying drawings of various embodiments of the disclosure. However, while the drawings are to aid in explanation and understanding, they are only an aid, and should not be taken to limit the disclosure to the specific embodiments depicted therein.

Fig. 1 illustrates an Evolved Node-B (eNB) requested procedure for switching between an antenna with correspondence and an antenna without correspondence, in accordance with some embodiments of the disclosure.

Fig. 2 illustrates a User Equipment (UE) triggered procedure for switching between an antenna with correspondence and an antenna without correspondence, in accordance with some embodiments of the disclosure.

Fig. 3 illustrates a first option for a frame structure, in accordance with some embodiments of the disclosure.

Fig. 4 illustrates a second option for a frame structure, in accordance with some embodiments of the disclosure.

Fig. 5 illustrates an eNB and a UE, in accordance with some embodiments of the disclosure.

Fig. 6 illustrates hardware processing circuitries for a UE for enabling beam correspondence indication and for joint Uplink (UL) / Downlink (DL) beam management, in accordance with some embodiments of the disclosure.

Fig. 7 illustrates methods for a UE for enabling beam correspondence indication, in accordance with some embodiments of the disclosure.

Fig. 8 illustrates methods for a UE for joint Uplink (UL) / Downlink (DL) beam management, in accordance with some embodiments of the disclosure.

**Fig. 9** illustrates example components of a device, in accordance with some embodiments of the disclosure.

**Fig. 10** illustrates example interfaces of baseband circuitry, in accordance with some embodiments of the disclosure.

## DETAILED DESCRIPTION

Various wireless cellular communication systems have been implemented or are being proposed, including a 3rd Generation Partnership Project (3GPP) Universal Mobile Telecommunications System (UMTS), a 3GPP Long-Term Evolution (LTE) system, a 3GPP LTE-Advanced system, and a 5th Generation (5G) wireless system / New Radio (NR) wireless system / 5G or NR mobile networks system.

5G wireless systems (and NR wireless systems) may provide support for higher bandwidths in part by supporting beamforming, such as Multiple-Input Multiple-Output (MIMO) beamforming, in which sets of antennas may cooperatively increase a signal strength and/or signal quality of a directional transmission. Moreover, various beams (such as various beamformed beams) may be made available for transmission and reception in various different directions.

In a multi-beam system, multiple beams may be applied to both an Evolved Node-B (eNB) side of a wireless communications link and a User Equipment (UE) side of the wireless communications link. On either end of a wireless communications link, a system may undertake beam management to determine which of many potential Transmit (Tx) beams is optimal and which of many potential Receive (Rx) beams is optimal (such as by sweeping across available beams to test signal quality), with various Tx beams and various Rx beams being associated with transmission directions and/or sets of antennas. Under conditions of beam correspondence (e.g., beam reciprocity), at either end of the wireless communications link, the Tx beam and the Rx beam that may be optimal may be associated with the same transmission direction and/or set of antennas.

With respect to various embodiments, beam correspondence (e.g., beam reciprocity) might not be properly assumed, and Uplink (UL) and Downlink (DL) beam management may be disposed to being done separately. This may result in a large overhead of beam management related signals. However if beam correspondence can be confirmed on the eNB side, on the UE side, or on both sides, beam management may be simplified. Hence an indication of beam correspondence may be desirable.

Disclosed herein are methods and mechanisms for enabling a beam correspondence indication. Various embodiments may comprise an eNB-side beam correspondence indication, a UE-side beam correspondence indication, or both, in various different stages.

With respect to various embodiments, a good UL beam pair (e.g., a UE/Network (NW) beam pair) and a good DL beam pair (e.g., a NW/UE beam pair) may help increase a link budget and suppress interference. UL beam management and DL beam management may help find such beam pairs.

UL beam management and DL beam management may be done independently, which may work straightforwardly for both UL and DL beam, whether with beam correspondence or without beam correspondence. Meanwhile, due to a UE's movement and rotation, and due to blockage, finding a new DL beam pair and a new UL beam pair may become important. However, separate beam management may result in large overhead if beam correspondence has been confirmed. Separate beam management may consume at least one DL subframe and at least one UL subframe. As a result, latency and a UE's power consumption may be large, and 5G UEs (and NR UEs) may be sensitive to latency and power consumption.

Disclosed herein are methods and mechanisms for joint UL/DL beam management. Such joint beam management may advantageously reduce latency and a UE's power consumption associated with beam management.

In the following description, numerous details are discussed to provide a more thorough explanation of embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical, mechanical, or magnetic connection between the things that are connected, without any intermediary devices. The term "coupled" means either a direct electrical, mechanical, or magnetic connection between the things that are connected or an indirect connection through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about" generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking, or in any other manner.

It is to be understood that the terms so used are interchangeable under appropriate circumstances such that the embodiments of the invention described herein are, for example, capable of operation in other orientations than those illustrated or otherwise described herein.

The terms "left," "right," "front," "back," "top," "bottom," "over," "under," and the like in the description and in the claims, if any, are used for descriptive purposes and not necessarily for describing permanent relative positions.

For purposes of the embodiments, the transistors in various circuits, modules, and logic blocks are Tunneling FETs (TFETs). Some transistors of various embodiments may comprise metal oxide semiconductor (MOS) transistors, which include drain, source, gate, and bulk terminals. The transistors may also include Tri-Gate and FinFET transistors, Gate All Around Cylindrical Transistors, Square Wire, or Rectangular Ribbon Transistors or other devices implementing transistor functionality like carbon nanotubes or spintronic devices. MOSFET symmetrical source and drain terminals i.e., are identical terminals and are interchangeably used here. A TFET device, on the other hand, has asymmetric Source and Drain terminals. Those skilled in the art will appreciate that other transistors, for example, Bi-polar junction transistors-BJT PNP/NPN, BiCMOS, CMOS, etc., may be used for some transistors without departing from the scope of the disclosure.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

In addition, for purposes of the present disclosure, the term "eNB" may refer to a legacy LTE capable Evolved Node-B (eNB), a centimeter-wave (cmWave) capable eNB or a cmWave small cell, a millimeter-wave (mmWave) capable eNB or an mmWave small cell, an Access Point (AP), an NB-IoT capable eNB, a CIoT capable eNB, an MTC capable eNB, and/or another base station for a wireless communication system. The term "gNB" may refer to a 5G-capable or NR-capable eNB, and the term "eNB" may also refer to a gNB. For purposes of the present disclosure, the term "UE" may refer to a legacy LTE capable User Equipment (UE), a next-generation or 5G capable UE, an mmWave capable UE, a cmWave capable UE, a Station (STA), an NB-IoT capable UE, a CIoT capable UE, an MTC capable UE, and/or another mobile equipment for a wireless communication system. The term "UE" may also refer to a 5G-capable or NR-capable UE.

Various embodiments of eNBs and/or UEs discussed below may process one or more transmissions of various types. Some processing of a transmission may comprise demodulating, decoding, detecting, parsing, and/or otherwise handling a transmission that has been received. In some embodiments, an eNB or UE processing a transmission may determine or recognize the transmission's type and/or a condition associated with the transmission. For some embodiments, an eNB or UE processing a transmission may act in accordance with the transmission's type, and/or may act conditionally based upon the transmission's type. An eNB or UE processing a transmission may also recognize one or more values or fields of data carried by the transmission. Processing a transmission may comprise moving the transmission through one or more layers of a protocol stack (which may be implemented in, e.g., hardware and/or software-configured elements), such as by moving a transmission that has been received by an eNB or a UE through one or more layers of a protocol stack.

Various embodiments of eNBs and/or UEs discussed below may also generate one or more transmissions of various types. Some generating of a transmission may comprise modulating, encoding, formatting, assembling, and/or otherwise handling a transmission that is to be transmitted. In some embodiments, an eNB or UE generating a transmission may establish the transmission's type and/or a condition associated with the transmission. For some embodiments, an eNB or UE generating a transmission may act in accordance with the transmission's type, and/or may act conditionally based upon the transmission's type. An eNB or UE generating a transmission may also determine one or more values or fields of data carried by the transmission. Generating a transmission may comprise moving the transmission through one or more layers of a protocol stack (which may be implemented in, e.g., hardware and/or software-configured elements), such as by moving a transmission to be sent by an eNB or a UE through one or more layers of a protocol stack.

In various embodiments, resources may span various Resource Blocks (RBs), Physical Resource Blocks (PRBs), and/or time periods (e.g., frames, subframes, and/or slots) of a wireless communication system. In some contexts, allocated resources (e.g., channels, Orthogonal Frequency-Division Multiplexing (OFDM) symbols, subcarrier frequencies, resource elements (REs), and/or portions thereof) may be formatted for (and prior to) transmission over a wireless communication link. In other contexts, allocated resources (e.g., channels, OFDM symbols, subcarrier frequencies, REs, and/or portions thereof) may be detected from (and subsequent to) reception over a wireless communication link.

With respect to various embodiments, an eNB may transmit some initial access related signals, such as a Primary Synchronization Signal (PSS), a Secondary Synchronization Signal (SSS), a Physical Broadcast Channel (PBCH), and so on. The PSS, SSS and PBCH may be considered to be portions of one Synchronization Signal (SS) block. In various embodiments, an eNB may transmit multiple SS blocks repeatedly, and/or across multiple beams. As a result, beam correspondence on the eNB side may be indicated by an SS block (and/or other common signals, such as broadcast signals).

In some embodiments, eNB beam correspondence may be configured via higher-layer signaling, such as Master Information Block (MIB) and/or System Information Blocks (SIBs). According to the invention as claimed, a PSS sequence index is determined by beam correspondence. An SSS sequence index is determined by beam correspondence. For some embodiments, an SSS sequence d(n) may be generated as follows:

$$d(2n) = \begin{cases} s_0^{(m_0)}(n)c_{\text{c}}(n) & \text{w/o beam reciprocity} \\ s_1^{(m_1)}(n)c_0(n) & \text{w/ beam reciprocity} \end{cases}$$

$$d(2n+1) = \begin{cases} s_1^{(m_1)}(n)c_1(n)z_1^{(m_0)}(n) & \text{w/o beam reciprocity} \\ s_0^{(m_0)}(n)c_1(n)z_1^{(m_1)}(n) & \text{w/ beam reciprocity} \end{cases}$$

Where the variables $S0$, $S1$, $C0$, $C1$, and/or $z1$ may be generated in a manner defined by section 6.11.2.1 of 3GPP Technical Specification (TS) 36.211.

In various embodiments, there may be a variety of types of UEs in a system. Type 1 UEs may be UEs with merely omni-directional antennas. Type 2 UEs may be UEs with merely calibrated directional antennas. Type 3 UEs may be UEs with merely non- calibrated directional antennas. Type 4 UEs may be UEs with both omni directional antennas and calibrated directional antennas. Type 5 UEs may be UEs with both omni-directional antennas and non-calibrated directional antennas.

For Type 1, Type 2, and Type 4 UEs, beam correspondence may be considered as being confirmed in UE side. For Type 3 UEs, beam correspondence might not be confirmed. For Type 5 UEs, beam correspondence may be confirmed for omni-directional antennas and might not be assumed for directional antennas. So, Type 5 UEs may use omnidirectional antennas to finish an initial access procedure, which may reduce an initial access latency, and may then enable directional antennas to achieve better link budgets.

According to the invention as claimed, a Physical Random Access Channel (PRACH) preamble index is determined by a UE-side beam correspondence. The first bit of a preamble index is used to indicate beam correspondence, where a first value (e.g., a value of "0") indicates no beam correspondence, and a second value (e.g., a value of "1") indicates beam correspondence. According to the invention as claimed, a PRACH preamble index is determined by antenna type and beam correspondence information. A two-bit preamble index (e.g., a PRACH preamble index) is used to as an indication of UE antenna type, in accordance with Table 1 below.

Table 1: example for 2-bit correspondence indication

| 2 bits within Preamble index | indication |
|---|---|
| 00 | Type 1 UE, Type 2 UE, Type 5 UE |
| 01 | Type 3 UE |
| 10 | Type 4 UE with omni-directional antenna during initial access |
| 11 | Type 4 UE with directional antenna during initial access |

For some embodiments, a UE beam correspondence may be indicated via messages during initial access. For example, a UE beam correspondence may be indicated via a Message 3 (Msg3), or via a UE capability report. The UE may report which type it belongs to (e.g., Type 1 to Type 5), and whether the initial access may be done via omni-directional antenna or directional antenna. In various embodiments, such an indication may be configured by initial access related messages, or higher-layer signaling.

In some embodiments, for Type 5 UEs, if the UE used an omni-directional antenna during initial access, a triggering of a non-calibrated directional antenna may be done in an eNB-requested manner, or in a UE-triggered manner.

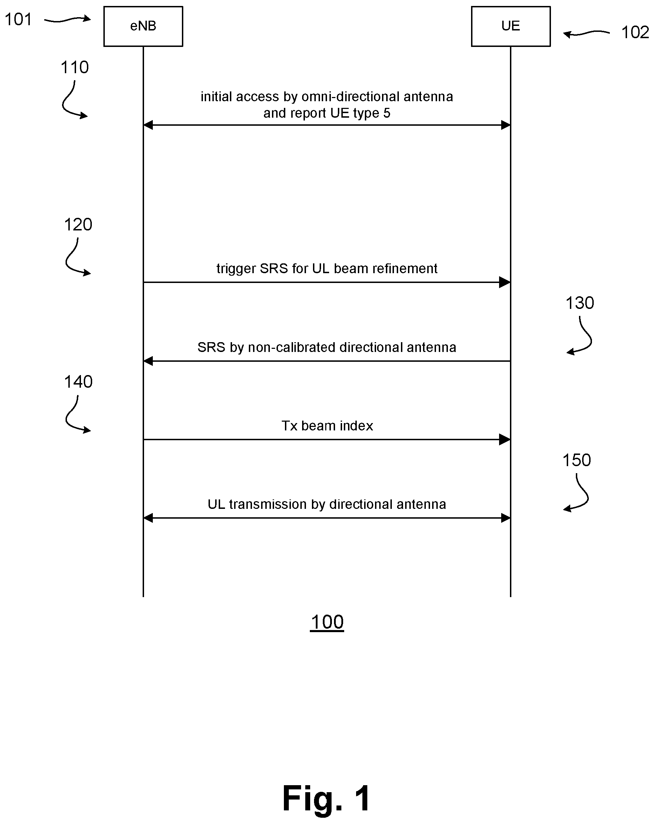

**Fig. 1** illustrates an eNB-requested procedure for switching between an antenna with correspondence (e.g., an omni-directional antenna) and an antenna without correspondence (e.g., a non-calibrated directional antenna), in accordance with some embodiments of the disclosure. A procedure 100 between an eNB 101 and a UE 102 may comprise a first part 110, a second part 120, a third part 130, a fourth part 140, and/or a fifth part 150.

In first part 110, an initial access of eNB 101 may be made by UE 102 by omni-directional antenna, and a report may be made that the UE is a Type 5 UE. In second part 120, eNB 101 may trigger Sounding Reference Signal (SRS) transmission for UL beam refinement.

In third part 130, UE 102 may transmit SRS by a non-calibrated directional antenna. In fourth part 140, eNB 101 may transmit a Tx beam index (e.g, an index of which UE Tx beam is optimal). In fifth part 150, UE 102 may engage in UL transmission by directional antenna (and eNB 101 may receive the associated transmissions).

In various embodiments, for an eNB-requested procedure, eNB 101 may send a UL grant to trigger SRS used for uplink beam management. Then, after receiving the signal identifying a UE Tx beam index, UE 102 may enable a directional antenna. In some embodiments, this request may be done via higher-layer signaling. Furthermore, a request to fall back to an omni-directional antenna (which may result in higher rank) may be done by higher-layer signaling, or by Downlink Control Information (DCI).

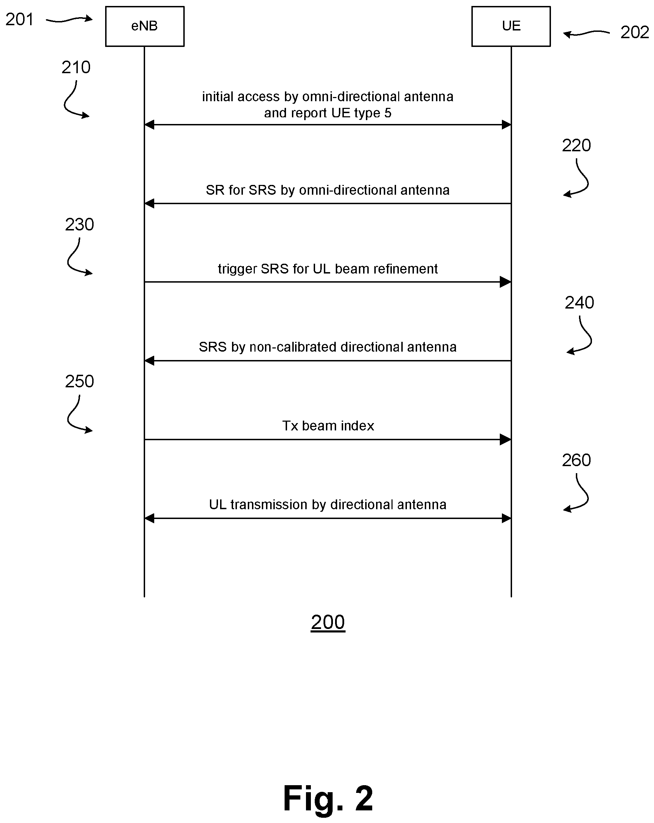

**Fig. 2** illustrates a UE-triggered procedure for switching between an antenna with correspondence (e.g., an omni-directional antenna) and an antenna without correspondence (e.g., a non-calibrated directional antenna), in accordance with some embodiments of the disclosure. A procedure 200 between an eNB 201 and a UE 202 may comprise a first part 210, a second part 220, a third part 230, a fourth part 240, a fifth part 250, and a sixth part 260.

In first part 210, an initial access of eNB 201 may be made by UE 202, by omni-directional antenna, and a report may be made that the UE is a Type 5 UE. In second part 220, UE 202 may transmit a Scheduling Request (SR) for SRS, by omni-directional antenna. In third part 230, eNB 201 may trigger SRS for UL beam refinement.

In fourth part 240, UE 202 may transmit SRS transmission by a non-calibrated directional antenna. In fifth part 250, eNB 201 may transmit a Tx beam index (e.g, an index of which UE Tx beam is optimal). In sixth part 260, UE 202 may engage in UL transmission by directional antenna (and eNB 201 may receive the associated transmissions).

In various embodiments, for a UE-triggered procedure, UE 202 may send a request of SRS by higher-layer signaling, or by a scheduling request (SR) for SRS by Physical Uplink Control Channel (PUCCH), or by an SR channel which may be received by Rx beam sweeping. In some embodiments, UE 202 may send information to fall back to an omni-directional antenna to eNB 201 by higher-layer signaling.

Accordingly, in various embodiments, a UE may comprise circuitry operable to receive an eNB-side correspondence (e.g., calibration) indication, and/or to feedback the UE's correspondence (e.g., calibration) information. In some embodiments, eNB correspondence may be indicated via SS, MIB, or SIB. For some embodiments, SSS or extended SS (ESS) may be determined by the eNB's correspondence. In some embodiments, a preamble index of PRACH may be determined by the UE's correspondence. For some embodiments, the UE's correspondence may be panel-specific. In some embodiments, the UE's correspondence may be reported via Msg3, or via other higher-layer signaling. For some embodiments, the UE's non-calibrated antenna panel may be enabled via an SRS grant, or via higher-layer signaling. In some embodiments, the UE's request to switch to a non-calibrated antenna panel may be transmitted via a scheduling request for SRS, or via higher-layer signaling.

With respect to various embodiments, to enable joint UL/DL beam management, one or more reference signals for UL and DL beam management may be utilized. An SRS may be denoted for use for UL beam management, and UE specific Channel State Information Reference Signal (CSI-RS) may be denoted for use for DL beam management. In various embodiments, signal structures for SRS and for CSI-RS may be based on a Interleaved Single-Carrier Frequency-Division Multiple Access (IFDMA) structure and/or a larger subcarrier spacing structure.

In some embodiments, SRS and CSI-RS may be mapped in a Time-Division Multiplexing (TDM) manner, in one slot (or subframe). A Physical Downlink Control Channel (PDCCH) may be utilized to carry DCI, and may be mapped with the SRS and CSI-RS in a TDM manner.

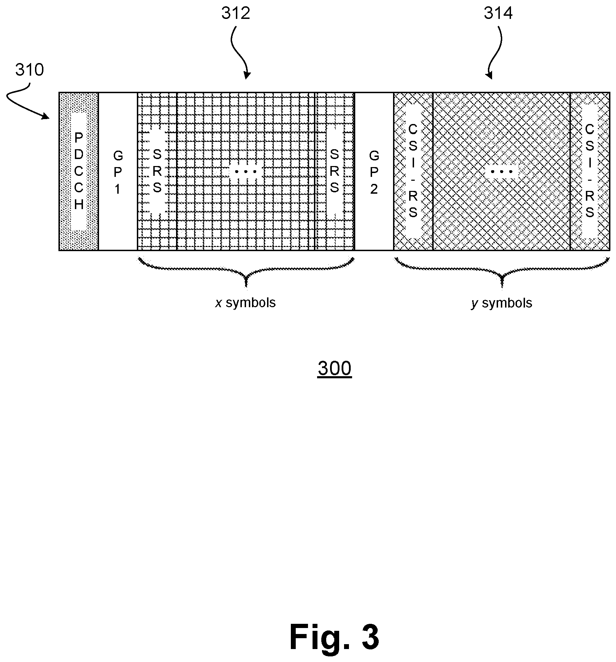

**Fig. 3** illustrates a first option for a frame structure, in accordance with some embodiments of the disclosure. In a first option for mapping SRS and CSI-RS, a frame structure 300 may comprise a PDCCH 310, an SRS 312, and a CSI-RS 314.

In various embodiments, PDCCH 310 may be transmitted in one or more initial Orthogonal Frequency-Division Multiplexing (OFDM) symbols of frame structure 300. SRS 312 may then be transmitted (e.g., by a UE) in one or more OFDM symbols subsequent to PDCCH 310, and CSI-RS 314 may be transmitted (e.g., by an eNB) in one or more OFDM symbols subsequent to SRS 312.

Various Guard Periods (GPs) may be added between different signals. For example, a first GP may be inserted between PDCCH 310 and SRS 312, and a second GP may be inserted between SRS 312 and CSI-RS 314.

In some embodiments, for frame structure 300, a UE may use an omni-directional Tx beam, or one or more wider beams, or one or more aggregated beams, to transmit SRS 312. If a link budget for the UE is good enough, an eNB (or another Transmission Reception Point (TRP)), may configure the UE to use an omni-directional Tx beam. If the link budget for the UE is limited, the eNB may configure the UE to use one or more wider beams with a small number of subcarriers. The UE may apply different wider beams to different SRS symbol(s). The number of wider beams, and the number of SRS 312 for one wider beam, may be predefined (or otherwise predetermined), or may be configured via higher-layer signaling, or may be configured via DCI. Whether the UE may use an omni-directional Tx beam or wider Tx beams may be configured via higher-layer signaling, or may be configured via DCI, or may be determined by a Reference Signal Received Power (RSRP).

After receiving SRS 312 (e.g., with Rx beam sweeping), the eNB may determine a best eNB beam. The eNB may then use the best eNB beam to transmit CSI-RS 314 for the UE to refine the UE beam. After receiving the CSI-RS 314, the best eNB/UE beam pair may be established.

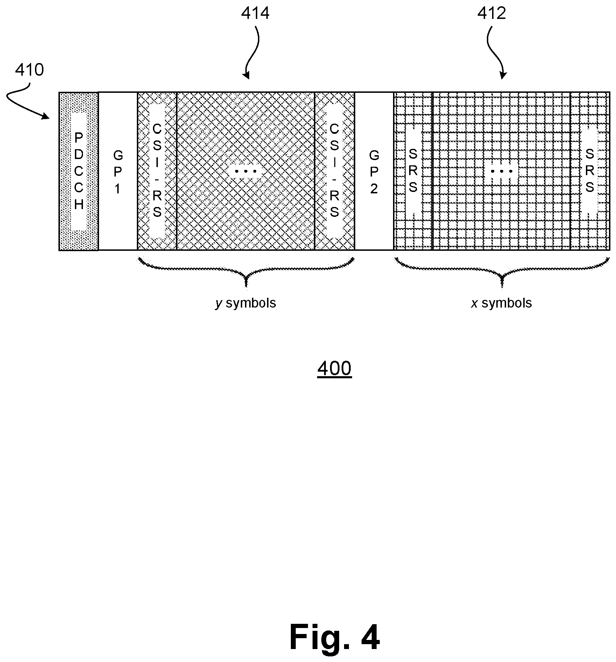

**Fig. 4** illustrates a second option for a frame structure, in accordance with some embodiments of the disclosure. In a second option for mapping SRS and CSI-RS, a frame structure 400 may comprise a PDCCH 410, a CSI-RS 414, and an SRS 412.

In various embodiments, PDCCH 410 may be transmitted in one or more initial OFDM symbols of frame structure 400. CSI-RS 414 may then be transmitted (e.g., by an eNB) in one or more OFDM symbols subsequent to PDCCH 410, and SRS 412 may be transmitted (e.g., by a UE) in one or more OFDM symbols subsequent to CSI-RS 414.

Various GPs may be added between different signals. For example, a first GP may be inserted between PDCCH 410 and CSI-RS 414, and a second GP may be inserted between CSI-RS 314 and SRS 412.

In some embodiments, for frame structure 400, an eNB may transmit CSI-RS 414 repeatedly with an omni-directional Tx beam, or with one or more wider eNB beams. A UE may then receive CSI-RS 414 repetitions (e.g., with an Rx beam sweeping operation). A best Rx beam may then be obtained, which be used to transmit SRS 412 repeatedly. The eNB may receive SRS 412 by different Rx beams, and may determine a best eNB beam. Thus a best UE/eNB beam pair may be established.

With respect to frame structure 300 and frame structure 400, in some embodiments, the first GP and the second GP in each frame structure may have the same size (e.g., duration), while in other embodiments, the first GP and the second GP may have different sizes. For some embodiments, PDCCH may be transmitted in a subframe number n-k, and SRS and CSI-RS may be transmitted in a subsequent subframe number n, where k may be pre-defined (or otherwise predetermined), or may be configured via higher-layer signaling, or may be configured via DCI.

In various embodiments, SRS may span a number of symbols x (e.g., a number of OFDM symbols), and CSI-RS may span a number of symbols y (e.g., a number of OFDM symbols). The values of x and y may be predefined (or otherwise predetermined), or may be configured via higher-layer signaling, or may be configured via DCI. In some embodiments, PDCCH may carry one joint DCI operable to configure both the SRS and the CSI-RS beam management reference signals. For some embodiments, PDCCH may carry two DCIs, one for configuring the SRS beam management reference signal, and one for configuring the CSI-RS beam management reference signal.

For various embodiments, frame structure 300 and/or frame structure 400 may comprise one slot, or one subframe. In various embodiments, frame structure 300 and/or frame structure 400 may comprise multiple slots, or multiple subframes. For some embodiments, SRS and CSI-RS may be located in different subframes.

Accordingly, in various embodiments, a UE may comprise circuitry to receive control signaling for joint UL/DL beam management, as well as CSI-RS for DL beam management, and may generate SRS for UL beam management. In some embodiments, PDCCH, SRS, and CSI-RS may be transmitted a TDM manner, and may be transmitted in one slot or subframe, or over multiple slots subframes.

For some embodiments, PDCCH may be mapped to one or more initial symbols, SRS may be mapped to one or more subsequent symbols, and CSI-RS may be mapped to one or more remaining symbols. Alternatively, PDCCH may be mapped to one or more initial symbols, CSI-RS may be mapped to one or more subsequent symbols, and SRS may be mapped to one or more remaining symbols.

In some embodiments, a GP may be inserted among the PDCCH, the SRS, and/or the CSI-RS. For some embodiments, various GPs inserted among the PDCCH, the SRS, and/or the CSI-RS may have the same length (or duration), while in other embodiments, the various GPs may have differing lengths (or durations).

In some embodiments, a number of symbols allocated to SRS and a number of symbols allocated to CSI-RS may be pre-defined (or otherwise predetermined), or may be configured via higher-layer signaling, or may be configured via DCI. For some embodiments, the SRS and the CSI-RS may be configured by one joint DCI, or may be configured by two separate DCI.

For some embodiments, the UE may use an omni-directional antenna or one or more wider beams to transmit SRS, as may be pre-defined (or otherwise predetermined), or configured via higher-layer signaling, or configured via DCI, or determined by an RSRP.

In some embodiments, the eNB may can use an omni-directional antenna or one or more wider beams to transmit CSI-RS, which may be used merely for UE beam refinement, and the UE may then use the refined beam to transmit SRS in every repetition.

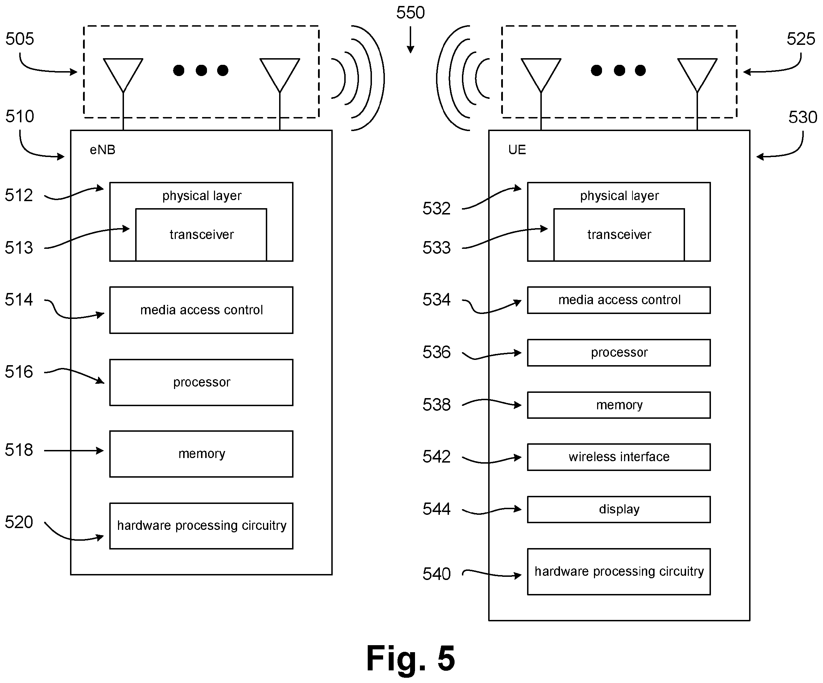

**Fig. 5** illustrates an eNB and a UE, in accordance with some embodiments of the disclosure. **Fig. 5** includes block diagrams of an eNB 510 and a UE 530 which are operable to co-exist with each other and other elements of an LTE network. High-level, simplified architectures of eNB 510 and UE 530 are described so as not to obscure the embodiments. It should be noted that in some embodiments, eNB 510 may be a stationary non-mobile device.

eNB 510 is coupled to one or more antennas 505, and UE 530 is similarly coupled to one or more antennas 525. However, in some embodiments, eNB 510 may incorporate or comprise antennas 505, and UE 530 in various embodiments may incorporate or comprise antennas 525.

In some embodiments, antennas 505 and/or antennas 525 may comprise one or more directional or omni-directional antennas, including monopole antennas, dipole antennas, loop antennas, patch antennas, microstrip antennas, coplanar wave antennas, or other types of antennas suitable for transmission of RF signals. In some MIMO (multiple-input and multiple output) embodiments, antennas 505 are separated to take advantage of spatial diversity.

eNB 510 and UE 530 are operable to communicate with each other on a network, such as a wireless network. eNB 510 and UE 530 may be in communication with each other over a wireless communication channel 550, which has both a downlink path from eNB 510 to UE 530 and an uplink path from UE 530 to eNB 510.

As illustrated in **Fig. 5,** in some embodiments, eNB 510 may include a physical layer circuitry 512, a MAC (media access control) circuitry 514, a processor 516, a memory 518, and a hardware processing circuitry 520. A person skilled in the art will appreciate that other components not shown may be used in addition to the components shown to form a complete eNB.

In some embodiments, physical layer circuitry 512 includes a transceiver 513 for providing signals to and from UE 530. Transceiver 513 provides signals to and from UEs or other devices using one or more antennas 505. In some embodiments, MAC circuitry 514 controls access to the wireless medium. Memory 518 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Hardware processing circuitry 520 may comprise logic devices or circuitry to perform various operations. In some embodiments, processor 516 and memory 518 are arranged to perform the operations of hardware processing circuitry 520, such as operations described herein with reference to logic devices and circuitry within eNB 510 and/or hardware processing circuitry 520.

Accordingly, in some embodiments, eNB 510 may be a device comprising an application processor, a memory, one or more antenna ports, and an interface for allowing the application processor to communicate with another device.

As is also illustrated in **Fig. 5,** in some embodiments, UE 530 may include a physical layer circuitry 532, a MAC circuitry 534, a processor 536, a memory 538, a hardware processing circuitry 540, a wireless interface 542, and a display 544. A person skilled in the art would appreciate that other components not shown may be used in addition to the components shown to form a complete UE.

In some embodiments, physical layer circuitry 532 includes a transceiver 533 for providing signals to and from eNB 510 (as well as other eNBs). Transceiver 533 provides signals to and from eNBs or other devices using one or more antennas 525. In some embodiments, MAC circuitry 534 controls access to the wireless medium. Memory 538 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Wireless interface 542 may be arranged to allow the processor to communicate with another device. Display 544 may provide a visual and/or tactile display for a user to interact with UE 530, such as a touch-screen display. Hardware processing circuitry 540 may comprise logic devices or circuitry to perform various operations. In some embodiments, processor 536 and memory 538 may be arranged to perform the operations of hardware processing circuitry 540, such as operations described herein with reference to logic devices and circuitry within UE 530 and/or hardware processing circuitry 540.

Accordingly, in some embodiments, UE 530 may be a device comprising an application processor, a memory, one or more antennas, a wireless interface for allowing the application processor to communicate with another device, and a touch-screen display.

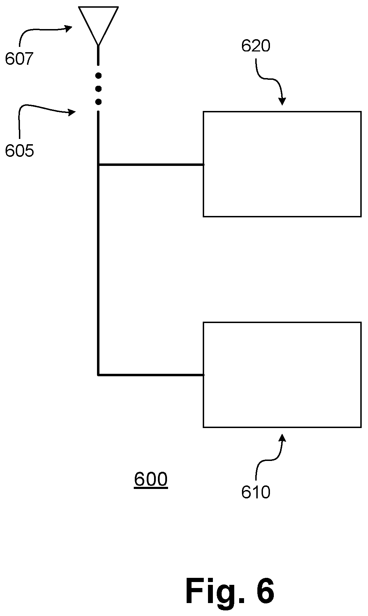

Elements of **Fig. 5,** and elements of other figures having the same names or reference numbers, can operate or function in the manner described herein with respect to any such figures (although the operation and function of such elements is not limited to such descriptions). For example, **Figs. 6 and 9-10** also depict embodiments of eNBs, hardware processing circuitry of eNBs, UEs, and/or hardware processing circuitry of UEs, and the embodiments described with respect to **Fig. 5** and **Figs. 6 and 9-10** can operate or function in the manner described herein with respect to any of the figures.

In addition, although eNB 510 and UE 530 are each described as having several separate functional elements, one or more of the functional elements may be combined and may be implemented by combinations of software-configured elements and/or other hardware elements. In some embodiments of this disclosure, the functional elements can refer to one or more processes operating on one or more processing elements. Examples of software and/or hardware configured elements include Digital Signal Processors (DSPs), one or more microprocessors, DSPs, Field-Programmable Gate Arrays (FPGAs), Application Specific Integrated Circuits (ASICs), Radio-Frequency Integrated Circuits (RFICs), and so on.

**Fig. 6** illustrates hardware processing circuitries for a UE for enabling beam correspondence indication and for joint Uplink (UL) / Downlink (DL) beam management, in accordance with some embodiments of the disclosure. With reference to **Fig. 5,** a UE may include various hardware processing circuitries discussed herein (such as hardware processing circuitry 600 of **Fig. 6**), which may in turn comprise logic devices and/or circuitry operable to perform various operations. For example, in **Fig. 5,** UE 530 (or various elements or components therein, such as hardware processing circuitry 540, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 536 (and/or one or more other processors which UE 530 may comprise), memory 538, and/or other elements or components of UE 530 (which may include hardware processing circuitry 540) may be arranged to perform the operations of these hardware processing circuitries, such as operations described herein with reference to devices and circuitry within these hardware processing circuitries. In some embodiments, processor 536 (and/or one or more other processors which UE 530 may comprise) may be a baseband processor.

Returning to **Fig. 6,** an apparatus of UE 530 (or another UE or mobile handset), which may be operable to communicate with one or more eNBs on a wireless network, may comprise hardware processing circuitry 600. In some embodiments, hardware processing circuitry 600 may comprise one or more antenna ports 605 operable to provide various transmissions over a wireless communication channel (such as wireless communication channel 550). Antenna ports 605 may be coupled to one or more antennas 607 (which may be antennas 525). In some embodiments, hardware processing circuitry 600 may incorporate antennas 607, while in other embodiments, hardware processing circuitry 600 may merely be coupled to antennas 607.

Antenna ports 605 and antennas 607 may be operable to provide signals from a UE to a wireless communications channel and/or an eNB, and may be operable to provide signals from an eNB and/or a wireless communications channel to a UE. For example, antenna ports 605 and antennas 607 may be operable to provide transmissions from UE 530 to wireless communication channel 550 (and from there to eNB 510, or to another eNB). Similarly, antennas 607 and antenna ports 605 may be operable to provide transmissions from a wireless communication channel 550 (and beyond that, from eNB 510, or another eNB) to UE 530.

Hardware processing circuitry 600 may comprise various circuitries operable in accordance with the various embodiments discussed herein. With reference to Fig. 6, hardware processing circuitry 600 may comprise a first circuitry 610 and/or a second circuitry 620.

In various embodiments, first circuitry 610 may be operable to process a first transmission carrying an indicator of eNB beam correspondence. Second circuitry 620 may be operable to generate a second transmission carrying an indicator of UE beam correspondence. Hardware processing circuitry 600 may comprise an interface for receiving the first transmission from a receiving circuitry and for sending the second transmission to a transmission circuitry.

In some embodiments, the first transmission may comprise a MIB and/or a SIB. For some embodiments, the first transmission may comprise a PSS, an SSS, a PBCH, and/or an Extended Synchronization Signal. In some embodiments, the eNB beam correspondence may determine at least one of: a PSS sequence index, or an SSS sequence index. For some embodiments, the UE beam correspondence may determine a PRACH preamble index.

For some embodiments, the UE beam correspondence may be a first UE beam correspondence corresponding with a first UE antenna panel. Second circuitry 620 may be operable to generate a third transmission carrying an indicator of the second UE beam correspondence.

In some embodiments, the second transmission may comprise higher-layer signaling. For some embodiments, a non-calibrated antenna panel of the UE may be enabled by an SRS grant, or higher-layer signaling.

For some embodiments, second circuitry 620 may be operable to generate a fourth transmission carrying a request to switch to a non-calibrated antenna panel of the UE. The fourth transmission may comprise a scheduling request for SRS, or higher-layer signaling. In some embodiments, second circuitry 620 may be operable to generate a fifth transmission carrying a report of one or more of the following UE capability indicators: a number of SRS resources, a number of SRS resource sets, or a number of SRS resources per SRS resource set. For various embodiments, the number of SRS resources may indicate a total number of UE beams, the number of SRS resource sets may indicate a number of UE panels (e.g., antenna panels), and the number of SRS resources per SRS resource set may indicate a number of UE beams per panel).

In various embodiments, first circuitry 610 may be operable to process a first transmission carrying a PDCCH. Second circuitry 620 may be operable to generate a second transmission carrying an SRS spanning one or more OFDM symbols. First circuitry 610 may also be operable to process a third transmission carrying a CSI-RS spanning one or more OFDM symbols. The PDCCH, the SRS, and the CSI-RS may be multiplexed in a TDM manner. Hardware processing circuitry 600 may comprise an interface for receiving the first transmission and the third transmission from a receiving circuitry and for sending the second transmission to a transmission circuitry.

In some embodiments, the PDCCH, the SRS, and/or the CSI-RS may occupy a single slot of a frame structure. For some embodiments, the second transmission may follow the first transmission, and the third transmission may follows the second transmission. In some embodiments, the third transmission may follow the first transmission, and the second transmission may follow the third transmission.

For some embodiments, a GP may extend between the PDCCH and one of: the SRS, and the CSI-RS. In some embodiments, a GP may extend between the SRS and the CSI-RS. For some embodiments, at least one of a number of OFDM symbols allocated to the SRS and a number of OFDM symbols allocated to the CSI-RS may be configured by a DCI, and/or higher-layer signaling. In some embodiments, the DCI may be a first DCI, the SRS may be configured by the first DCI, and the CSI-RS may be configured by a second DCI.

In some embodiments, first circuitry 610 and/or second circuitry 620 may be implemented as separate circuitries. In other embodiments, first circuitry 610 and/or second circuitry 620 may be combined and implemented together in a circuitry without altering the essence of the embodiments.

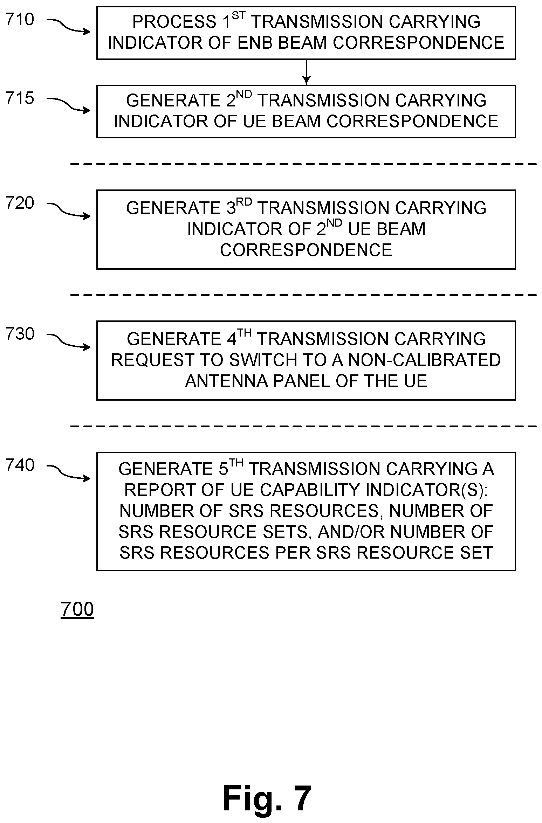

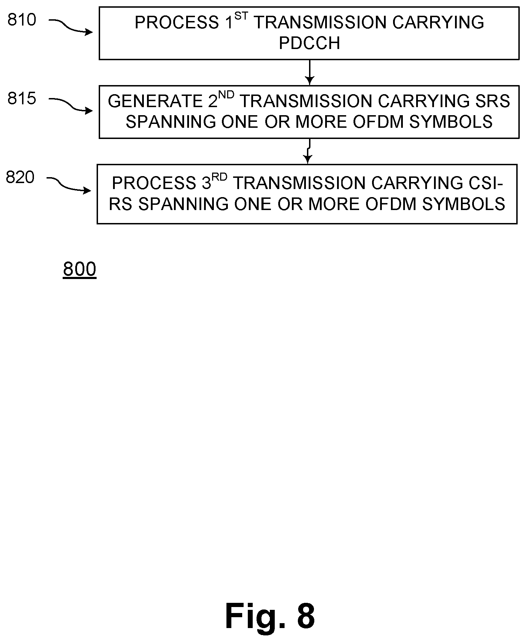

**Fig. 7** illustrates methods for a UE for enabling beam correspondence indication, in accordance with some embodiments of the disclosure. **Fig. 8** illustrates methods for a UE for joint Uplink (UL) / Downlink (DL) beam management, in accordance with some embodiments of the disclosure. With reference to **Fig. 5,** methods that may relate to UE 530 and hardware processing circuitry 540 are discussed herein. Although the actions in method 700 of **Fig. 7** and method 800 of **Fig. 8** are shown in a particular order, the order of the actions can be modified. Thus, the illustrated embodiments can be performed in a different order, and some actions may be performed in parallel. Some of the actions and/or operations listed in **Figs. 7 and 8** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause UE 530 and/or hardware processing circuitry 540 to perform an operation comprising the methods of **Figs. 7 and 8.** Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods of **Figs. 7 and 8.**

Returning to **Fig. 7,** various methods may be in accordance with the various embodiments discussed herein. A method 700 may comprise a processing 710 and a generating 715. Method 700 may also comprise a generating 720, a generating 730, and/or a generating 740.

In processing 710, a first transmission carrying an indicator of eNB beam correspondence may be processed. In generating 715, a second transmission carrying an indicator of UE beam correspondence may be generated.

In some embodiments, the first transmission may comprise a MIB and/or a SIB. For some embodiments, the first transmission may comprise a PSS, an SSS, a PBCH, and/or an Extended Synchronization Signal. In all embodiments of the present invention, the eNB beam correspondence determines at least one of: a PSS sequence index, or an SSS sequence index. For some embodiments, the UE beam correspondence may determine a PRACH preamble index.

For some embodiments, the UE beam correspondence may be a first UE beam correspondence corresponding with a first UE antenna panel. In generating 720, a third transmission carrying an indicator of the second UE beam correspondence may be generated.

In some embodiments, the second transmission may comprise higher-layer signaling. For some embodiments, a non-calibrated antenna panel of the UE may be enabled by an SRS grant, or higher-layer signaling.

For some embodiments, in generating 730, a fourth transmission carrying a request to switch to a non-calibrated antenna panel of the UE may be generated. The fourth transmission may comprise a scheduling request for SRS, or higher-layer signaling. In some embodiments, in generating 740, a fifth transmission may be generated, the fifth transmission carrying a report of one or more of the following UE capability indicators: a number of SRS resources, a number of SRS resource sets, or a number of SRS resources per SRS resource set. For various embodiments, the number of SRS resources may indicate a total number of UE beams, the number of SRS resource sets may indicate a number of UE panels (e.g., antenna panels), and the number of SRS resources per SRS resource set may indicate a number of UE beams per panel).

Returning to **Fig. 8,** various methods may be in accordance with the various embodiments discussed herein. A method 800 may comprise a processing 810, a generating 815, and a processing 820. In processing 810, a first transmission carrying a PDCCH may be processed. In generating 815, a second transmission carrying an SRS spanning one or more OFDM symbols may be processed. In processing 820, a third transmission carrying a CSI-RS spanning one or more OFDM symbols may be processed. The PDCCH, the SRS, and/or the CSI-RS are multiplexed in a TDM manner.

In some embodiments, the PDCCH, the SRS, and/or the CSI-RS may occupy a single slot of a frame structure. For some embodiments, the second transmission may follow the first transmission, and the third transmission may follow the second transmission. In some embodiments, the third transmission may follow the first transmission, and the second transmission may follow the third transmission.

For some embodiments, a GP may extend between the PDCCH and one of: the SRS, and the CSI-RS. In some embodiments, a GP may extend between the SRS and the CSI-RS. For some embodiments, at least one of a number of OFDM symbols allocated to the SRS and a number of OFDM symbols allocated to the CSI-RS may be configured by a DCI, and/or higher-layer signaling. In some embodiments, the DCI may be a first DCI, the SRS may be configured by the first DCI, and the CSI-RS may be configured by a second DCI.

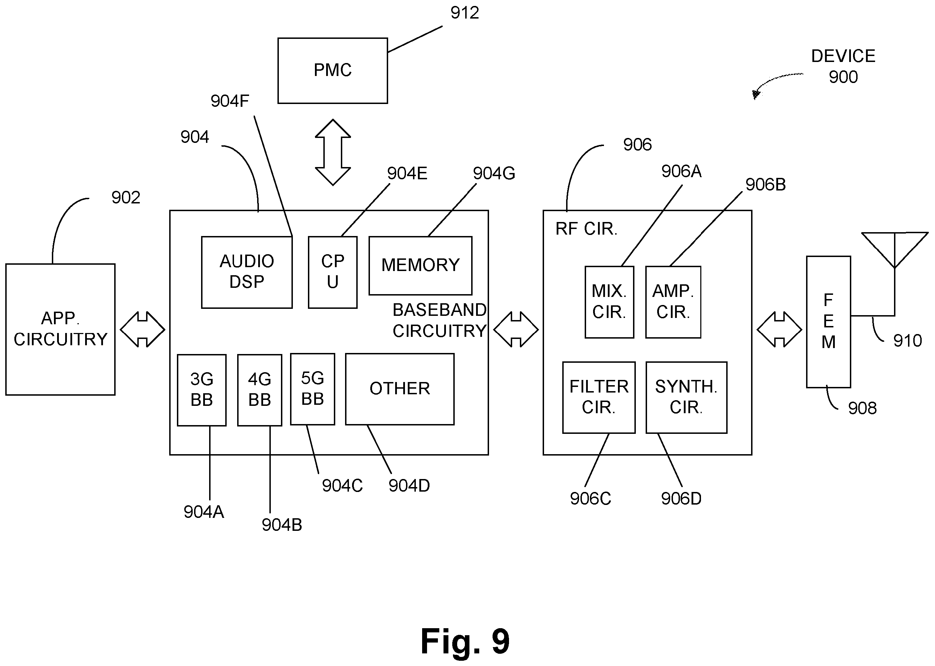

**Fig. 9** illustrates example components of a device, in accordance with some embodiments of the disclosure. In some embodiments, the device 900 may include application circuitry 902, baseband circuitry 904, Radio Frequency (RF) circuitry 906, front-end module (FEM) circuitry 908, one or more antennas 910, and power management circuitry (PMC) 912 coupled together at least as shown. The components of the illustrated device 900 may be included in a UE or a RAN node. In some embodiments, the device 900 may include less elements (e.g., a RAN node may not utilize application circuitry 902, and instead include a processor/controller to process IP data received from an EPC). In some embodiments, the device 900 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, an so on). The processors may be coupled with or may include memory/storage and may be configured to execute instructions stored in the memory/storage to enable various applications or operating systems to run on the device 900. In some embodiments, processors of application circuitry 902 may process IP data packets received from an EPC.

The baseband circuitry 904 may include circuitry such as, but not limited to, one or more single-core or multi-core processors. The baseband circuitry 904 may include one or more baseband processors or control logic to process baseband signals received from a receive signal path of the RF circuitry 906 and to generate baseband signals for a transmit signal path of the RF circuitry 906. Baseband processing circuity 904 may interface with the application circuitry 902 for generation and processing of the baseband signals and for controlling operations of the RF circuitry 906. For example, in some embodiments, the baseband circuitry 904 may include a third generation (3G) baseband processor 904A, a fourth generation (4G) baseband processor 904B, a fifth generation (5G) baseband processor 904C, or other baseband processor(s) 904D for other existing generations, generations in development or to be developed in the future (e.g., second generation (2G), sixth generation (6G), and so on). The baseband circuitry 904 (e.g., one or more of baseband processors 904A-D) may handle various radio control functions that enable communication with one or more radio networks via the RF circuitry 906. In other embodiments, some or all of the functionality of baseband processors 904A-D may be included in modules stored in the memory 904G and executed via a Central Processing Unit (CPU) 904E. The radio control functions may include, but are not limited to, signal modulation/demodulation, encoding/decoding, radio frequency shifting, and so on. In some embodiments, modulation/demodulation circuitry of the baseband circuitry 904 may include Fast-Fourier Transform (FFT), precoding, or constellation mapping/demapping functionality. In some embodiments, encoding/decoding circuitry of the baseband circuitry 904 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 904 may include one or more audio digital signal processor(s) (DSP) 904F. The audio DSP(s) 904F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 904 and the application circuitry 902 may be implemented together such as, for example, on a system on a chip (SOC).

In some embodiments, the baseband circuitry 904 may provide for communication compatible with one or more radio technologies. For example, in some embodiments, the baseband circuitry 904 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 904 is configured to support radio communications of more than one wireless protocol may be referred to as multi-mode baseband circuitry.

RF circuitry 906 may enable communication with wireless networks using modulated electromagnetic radiation through a non-solid medium. In various embodiments, the RF circuitry 906 may include switches, filters, amplifiers, and so on to facilitate the communication with the wireless network. RF circuitry 906 may include a receive signal path which may include circuitry to down-convert RF signals received from the FEM circuitry 908 and provide baseband signals to the baseband circuitry 904. RF circuitry 906 may also include a transmit signal path which may include circuitry to up-convert baseband signals provided by the baseband circuitry 904 and provide RF output signals to the FEM circuitry 908 for transmission.

In some embodiments, the receive signal path of the RF circuitry 906 may include mixer circuitry 906A, amplifier circuitry 906B and filter circuitry 906C. In some embodiments, the transmit signal path of the RF circuitry 906 may include filter circuitry 906C and mixer circuitry 906A. RF circuitry 906 may also include synthesizer circuitry 906D for synthesizing a frequency for use by the mixer circuitry 906A of the receive signal path and the transmit signal path. In some embodiments, the mixer circuitry 906A of the receive signal path may be configured to down-convert RF signals received from the FEM circuitry 908 based on the synthesized frequency provided by synthesizer circuitry 906D. The amplifier circuitry 906B may be configured to amplify the down-converted signals and the filter circuitry 906C may be a low-pass filter (LPF) or band-pass filter (BPF) configured to remove unwanted signals from the down-converted signals to generate output baseband signals. Output baseband signals may be provided to the baseband circuitry 904 for further processing. In some embodiments, the output baseband signals may be zero-frequency baseband signals, although this is not a requirement. In some embodiments, mixer circuitry 906A of the receive signal path may comprise passive mixers, although the scope of the embodiments is not limited in this respect.

In some embodiments, the mixer circuitry 906A of the transmit signal path may be configured to up-convert input baseband signals based on the synthesized frequency provided by the synthesizer circuitry 906D to generate RF output signals for the FEM circuitry 908. The baseband signals may be provided by the baseband circuitry 904 and may be filtered by filter circuitry 906C.

In some embodiments, the mixer circuitry 906A of the receive signal path and the mixer circuitry 906A of the transmit signal path may include two or more mixers and may be arranged for quadrature downconversion and upconversion, respectively. In some embodiments, the mixer circuitry 906A of the receive signal path and the mixer circuitry 906A of the transmit signal path may include two or more mixers and may be arranged for image rejection (e.g., Hartley image rejection). In some embodiments, the mixer circuitry 906A of the receive signal path and the mixer circuitry 906A may be arranged for direct downconversion and direct upconversion, respectively. In some embodiments, the mixer circuitry 906A of the receive signal path and the mixer circuitry 906A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906.

In some dual-mode embodiments, a separate radio IC circuitry may be provided for processing signals for each spectrum, although the scope of the embodiments is not limited in this respect.

In some embodiments, the synthesizer circuitry 906D may be a fractional-N synthesizer or a fractional N/N+1 synthesizer, although the scope of the embodiments is not limited in this respect as other types of frequency synthesizers may be suitable. For example, synthesizer circuitry 906D may be a delta-sigma synthesizer, a frequency multiplier, or a synthesizer comprising a phase-locked loop with a frequency divider.

The synthesizer circuitry 906D may be configured to synthesize an output frequency for use by the mixer circuitry 906A of the RF circuitry 906 based on a frequency input and a divider control input. In some embodiments, the synthesizer circuitry 906D may be a fractional N/N+1 synthesizer.

In some embodiments, frequency input may be provided by a voltage controlled oscillator (VCO), although that is not a requirement. Divider control input may be provided by either the baseband circuitry 904 or the applications processor 902 depending on the desired output frequency. In some embodiments, a divider control input (e.g., N) may be determined from a look-up table based on a channel indicated by the applications processor 902.

Synthesizer circuitry 906D of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

FEM circuitry 908 may include a receive signal path which may include circuitry configured to operate on RF signals received from one or more antennas 910, amplify the received signals and provide the amplified versions of the received signals to the RF circuitry 906 for further processing. FEM circuitry 908 may also include a transmit signal path which may include circuitry configured to amplify signals for transmission provided by the RF circuitry 906 for transmission by one or more of the one or more antennas 910. In various embodiments, the amplification through the transmit or receive signal paths may be done solely in the RF circuitry 906, solely in the FEM 908, or in both the RF circuitry 906 and the FEM 908.

In some embodiments, the FEM circuitry 908 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission (e.g., by one or more of the one or more antennas 910).

In some embodiments, the PMC 912 may manage power provided to the baseband circuitry 904. In particular, the PMC 912 may control power-source selection, voltage scaling, battery charging, or DC-to-DC conversion. The PMC 912 may often be included when the device 900 is capable of being powered by a battery, for example, when the device is included in a UE. The PMC 912 may increase the power conversion efficiency while providing desirable implementation size and heat dissipation characteristics.

While **Fig. 9** shows the PMC 912 coupled only with the baseband circuitry 904. However, in other embodiments, the PMC 912 may be additionally or alternatively coupled with, and perform similar power management operations for, other components such as, but not limited to, application circuitry 902, RF circuitry 906, or FEM 908.

In some embodiments, the PMC 912 may control, or otherwise be part of, various power saving mechanisms of the device 900. For example, if the device 900 is in an RRC_Connected state, where it is still connected to the RAN node as it expects to receive traffic shortly, then it may enter a state known as Discontinuous Reception Mode (DRX) after a period of inactivity. During this state, the device 900 may power down for brief intervals of time and thus save power.

If there is no data traffic activity for an extended period of time, then the device 900 may transition off to an RRC_Idle state, where it disconnects from the network and does not perform operations such as channel quality feedback, handover, and so on. The device 900 goes into a very low power state and it performs paging where again it periodically wakes up to listen to the network and then powers down again. The device 900 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 902 and processors of the baseband circuitry 904 may be used to execute elements of one or more instances of a protocol stack. For example, processors of the baseband circuitry 904, alone or in combination, may be used execute Layer 3, Layer 2, or Layer 1 functionality, while processors of the application circuitry 904 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

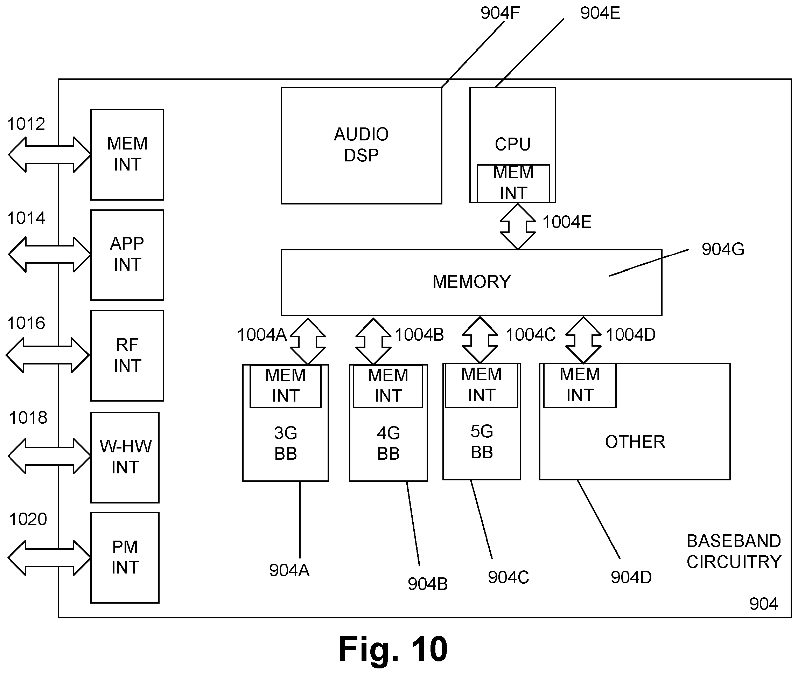

**Fig. 10** illustrates example interfaces of baseband circuitry, in accordance with some embodiments of the disclosure. As discussed above, the baseband circuitry 904 of **Fig. 9** may comprise processors 904A-904E and a memory 904G utilized by said processors. Each of the processors 904A-904E may include a memory interface, 1004A-1004E, respectively, to send/receive data to/from the memory 904G.

The baseband circuitry 904 may further include one or more interfaces to communicatively couple to other circuitries/devices, such as a memory interface 1012 (e.g., an interface to send/receive data to/from memory external to the baseband circuitry 904), an application circuitry interface 1014 (e.g., an interface to send/receive data to/from the application circuitry 902 of **Fig. 9**), an RF circuitry interface 1016 (e.g., an interface to send/receive data to/from RF circuitry 906 of **Fig. 9**), a wireless hardware connectivity interface 1018 (e.g., an interface to send/receive data to/from Near Field Communication (NFC) components, Bluetooth® components (e.g., Bluetooth® Low Energy), Wi-Fi® components, and other communication components), and a power management interface 1020 (e.g., an interface to send/receive power or control signals to/from the PMC 912.

It is pointed out that elements of any of the Figures herein having the same reference numbers and/or names as elements of any other Figure herein may, in various embodiments, operate or function in a manner similar those elements of the other Figure (without being limited to operating or functioning in such a manner).

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of " an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. For example, other memory architectures e.g., Dynamic RAM (DRAM) may use the embodiments discussed. The embodiments of the disclosure are intended to embrace all such alternatives, modifications, and variations as to fall within the broad scope of the appended claims.

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

**Claims**

1. A User Equipment, UE, (102, 530) operable to communicate with an Evolved Node-B, eNB, (101, 510) on a wireless network, said UE comprising:

   hardware processing circuitry (540) comprising first circuitry, second circuitry and an interface;
   receiving circuitry;
   transmission circuitry;
   wherein said receiving circuitry is configured to receive, from the eNB, a first transmission comprising a Primary Synchronization Signal, PSS, having a sequence index determined by eNB beam correspondence or a Secondary Synchronization Signal, SSS, having a sequence index determined by eNB beam correspondence;
   wherein said first circuitry is configured to process said first transmission;
   wherein said secondary circuitry is configured to generate a second transmission comprising a Physical Random Access Channel, PRACH, message having a preamble index having one bit determined by UE beam correspondence and a two consecutive bits determined by an antenna type of the UE ;
   wherein said interface is configured to receive the first transmission from the receiving circuitry and to send the second transmission to the transmission circuitry, and wherein said transmission circuitry is configured to send the second transmission to the eNB.

2. The UE of claim 1, further comprising an application processor, a memory, one or more antennas, a wireless interface for allowing the application processor to communicate with another device, and a touch-screen display.

3. A method performed by the User Equipment of claim 1, the method comprising:

   receiving, from an eNB, a first transmission comprising a Primary Synchronization Signal, PSS, having a sequence index determined by eNB beam correspondence or a Secondary Synchronization Signal, SSS, having a sequence index determined by eNB beam correspondence;
   generating a second transmission comprising a Physical Random Access Channel, PRACH, message having a preamble index determined by UE beam correspondence and two consecutive bits determined by an antenna type of the UE; and

transmitting the second transmission to the eNB.

4. Machine readable storage media having machine executable instructions stored thereon that, when executed, cause one or more processors to perform a method according to claim 3.

## Patentansprüche

1. Benutzervorrichtung, UE, (102, 530), die zur Kommunikation mit einem Evolved Node-B, eNB, (101, 510) in einem drahtlosen Netzwerk betreibbar ist, wobei dieUE umfasst:

eine Hardware-Verarbeitungsschaltung (540), die eine erste Schaltung, eine zweite Schaltung und eine Schnittstelle umfasst;
eine Empfangsschaltung;
eine Sendeschaltung;
wobei die Empfangsschaltung so konfiguriert ist, dass sie von dem eNB eine erste Übertragung empfängt, die ein Primärsynchronisationssignal, PSS, mit einem durch eNB-Strahlkorrespondenz bestimmten Sequenzindex oder ein Sekundärsynchronisationssignal, SSS, mit einem durch eNB-Strahlkorrespondenz bestimmten Sequenzindex umfasst;
wobei die erste Schaltung so konfiguriert ist, dass sie die erste Übertragung verarbeitet;
wobei die sekundäre Schaltungsanordnung so konfiguriert ist, dass sie eine zweite Übertragung erzeugt, die eine Physical-Random-Access-Channel-PRACH-Nachricht mit einem Präambelindex mit einem Bit, das durch die UE-Strahlkorrespondenz bestimmt wird, und zwei aufeinanderfolgenden Bits, die durch einen Antennentyp des UE bestimmt werden, umfasst;
wobei die Schnittstelle so konfiguriert ist, dass sie die erste Übertragung von der Empfangsschaltungsanordnung empfängt und die zweite Übertragung an die Übertragungsschaltungsanordnung sendet, und wobei die Übertragungsschaltungsanordnung so konfiguriert ist, dass sie die zweite Übertragung an den eNB sendet.

2. UE nach Anspruch 1, ferner umfassend einen Anwendungsprozessor, einen Speicher, eine oder mehrere Antennen, eine drahtlose Schnittstelle, die es dem Anwendungsprozessor ermöglicht, mit einer anderen Vorrichtung zu kommunizieren, und einem Touchscreen-Display.

3. Verfahren, das von der Benutzervorrichtung nach Anspruch 1 durchgeführt wird, wobei das Verfahren umfasst:

Empfangen einer ersten Übertragung von einem eNB, die ein Primärsynchronisationssignal, PSS, mit einem durch eNB-Strahlkorrespondenz bestimmten Sequenzindex oder ein Sekundärsynchronisationssignal, SSS, mit einem durch eNB-Strahlkorrespondenz bestimmten Sequenzindex umfasst;
Erzeugen einer zweiten Übertragung, die eine Physical-Random-Access-Channel-PRACH-Nachricht mit einem durch die UE-Strahlkorrespondenz bestimmten Präambelindex und zwei durch einen Antennentyp des UE bestimmten aufeinanderfolgenden Bits umfasst; und
Senden der zweiten Übertragung an den eNB.

4. Maschinenlesbare Speichermedien mit darauf gespeicherten maschinenausführbaren Befehlen, die, wenn sie ausgeführt werden, einen oder mehrere Prozessoren veranlassen, ein Verfahren nach Anspruch 3 durchzuführen.

## Revendications

1. Un équipement utilisateur, UE, (102, 530) fonctionnel pour communiquer avec un nœud B évolué, eNB, (101, 510) sur un réseau sans fil, ledit UE comprenant :

une circuiterie matérielle de traitement (540) comprenant une première circuiterie, une seconde circuiterie et une interface ;
une circuiterie de réception ;
une circuiterie d'émission ;
dans lequel ladite circuiterie de réception est configurée pour recevoir, en provenance de l'eNB, une première transmission comprenant un signal de synchronisation primaire, PSS, ayant un indice de séquence déterminé par une correspondance de faisceau d'eNB ou un signal de synchronisation secondaire, SSS, ayant un indice de séquence déterminé par la correspondance de faisceau d'eNB ;

dans lequel ladite première circuiterie est configurée pour traiter ladite première transmission ;

dans lequel ladite seconde circuiterie est configurée pour générer une seconde transmission comprenant un message de canal d'accès aléatoire physique, PRACH, ayant un indice de préambule avec un bit déterminé par une correspondance de faisceau de UE et deux bits consécutifs déterminés par un type d'antenne de l'UE ;

dans lequel ladite interface est configurée pour recevoir la première transmission de la circuiterie de réception et pour envoyer la seconde transmission à la circuiterie d'émission, et dans lequel ladite circuiterie d'émission est configurée pour envoyer la seconde transmission à l'eNB.

2. L'UE de la revendication 1, comprenant en outre un processeur applicatif, une mémoire, une ou plusieurs antennes, une interface sans fil pour permettre au processeur applicatif de communiquer avec un autre dispositif, et un afficheur à écran tactile.

3. Un procédé mis en œuvre par l'équipement utilisateur de la revendication 1, le procédé comprenant :

la réception, en provenance d'un eNB, d'une première transmission comprenant un signal de synchronisation primaire, PSS, ayant un indice de séquence déterminé par une correspondance de faisceau d'eNB ou un signal de synchronisation secondaire, SSS, ayant un indice de séquence déterminé par la correspondance de faisceau d'eNB ;

la génération d'une seconde transmission comprenant un message de canal d'accès aléatoire physique, PRACH ayant un indice de préambule déterminé par la correspondance de faisceau de UE et deux bits consécutifs déterminés par un type d'antenne de l'UE ; et

la transmission de la seconde transmission à l'eNB.

4. Support de stockage lisible par machine avec des instructions exécutables par machine stockées dessus qui, lorsqu'elles sont exécutées, font en sorte qu'un ou plusieurs processeurs mettent en œuvre un procédé selon la revendication 3.

101 → eNB     UE ← 102

110 — initial access by omni-directional antenna and report UE type 5

120 — trigger SRS for UL beam refinement

130 — SRS by non-calibrated directional antenna

140 — Tx beam index

150 — UL transmission by directional antenna

100

# Fig. 1

201 → | eNB |

| UE | ← 202

210

initial access by omni-directional antenna
and report UE type 5

220

SR for SRS by omni-directional antenna

230

trigger SRS for UL beam refinement

240

SRS by non-calibrated directional antenna

250

Tx beam index

260

UL transmission by directional antenna

200

# Fig. 2

Fig. 3

Fig. 4

**Fig. 5**

EP 3 536 101 B1

607

605

620

600

610

**Fig. 6**

710 PROCESS 1ST TRANSMISSION CARRYING INDICATOR OF ENB BEAM CORRESPONDENCE

715 GENERATE 2ND TRANSMISSION CARRYING INDICATOR OF UE BEAM CORRESPONDENCE

---

720 GENERATE 3RD TRANSMISSION CARRYING INDICATOR OF 2ND UE BEAM CORRESPONDENCE

---

730 GENERATE 4TH TRANSMISSION CARRYING REQUEST TO SWITCH TO A NON-CALIBRATED ANTENNA PANEL OF THE UE

---

740 GENERATE 5TH TRANSMISSION CARRYING A REPORT OF UE CAPABILITY INDICATOR(S): NUMBER OF SRS RESOURCES, NUMBER OF SRS RESOURCE SETS, AND/OR NUMBER OF SRS RESOURCES PER SRS RESOURCE SET

<u>700</u>

# Fig. 7

810 ⟶ PROCESS 1$^{ST}$ TRANSMISSION CARRYING PDCCH

815 ⟶ GENERATE 2$^{ND}$ TRANSMISSION CARRYING SRS SPANNING ONE OR MORE OFDM SYMBOLS

820 ⟶ PROCESS 3$^{RD}$ TRANSMISSION CARRYING CSI-RS SPANNING ONE OR MORE OFDM SYMBOLS

800

# Fig. 8

**Fig. 9**

**Fig. 10**

EP 3 536 101 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62417582

- US 62418483

**Non-patent literature cited in the description**

- **INTERDIGITAL COMMUNICATIONS**. 3GPP TSG RAN WG1 Meeting #86bis; R1-1610356; Considerations for DL Broadcast Channel. *3GPP DRAFT; R1-1610356*, vol. RAN WG1

- **SAMSUNG**. 3GPP TSG RAN WG1 Meeting #86bis; R1-1609117; Discussion on RA procedure. *3GPP DRAFT; R1-1609117*, vol. RAN WG1